# EUROPEAN PATENT APPLICATION

(11) **EP 4 797 399 A1**
(43) Date of publication of application: **26.08.2026**
(21) Application number: 26151772.6
(22) Date of filing: 14.01.2026
(51) Int. Cl.: H01M 50/188, H01M 50/103, H01M 50/15, H01M 50/184, H01M 50/186, H01M 50/193, H01M 50/553

(54) **SECONDARY BATTERY, SECONDARY BATTERY MANUFACTURING METHOD, AND BATTERY MODULE**

(30) Priority: 20.02.2025 KR 20250022333
(71) Applicant: SAMSUNG SDI CO., LTD., Yongin-si, Gyeonggi-do 17084 (KR)
(72) Inventor: LEE, Hyun Soo, Suwon-si, Gyeonggi-do 16678 (KR)
(74) Representative: Gulde & Partner

(57) **Abstract**

A secondary battery (2) includes a case (100), an electrode assembly (200) accommodated in the case (100), a cap plate (300) coupled to the case (100) and including an inner surface (301) facing the electrode assembly (200) and an outer surface (302) opposite to the inner surface (301), a terminal (400) protruding outward from the cap plate (300) and connected to the electrode assembly (200), a gasket (500) between the cap plate (300) and the terminal (400), and an outer groove (600) that is concave from the outer surface (302) toward the inner surface (301) and surrounds the gasket (500).

## Description

### BACKGROUND

### 1. Field

The present disclosure relates to a secondary battery, a secondary battery manufacturing method, and a battery module.

### 2. Discussion of Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure is only intended to improve understanding of the background of the present disclosure, and thus may include information that does not constitute the related art.

### SUMMARY

The present disclosure is directed to providing a secondary battery, a secondary battery manufacturing method, and a battery module to improve appearance quality of a gasket.

These and other aspects and features of the present disclosure will be described in or will be apparent from the following description of some embodiments of the present disclosure.

In accordance with one aspect of the present disclosure, a secondary battery includes a case, an electrode assembly accommodated in the case, a cap plate coupled to the case and including an inner surface facing the electrode assembly and an outer surface opposite to the inner surface, a terminal protruding outward from the cap plate and connected to the electrode assembly, a gasket between the cap plate and the terminal, and an outer groove that is concave from the outer surface toward the inner surface and surrounds the gasket.

A width of the outer groove may be in a range from approximately 0.1 mm to approximately 1 mm.

A ratio of a depth of the outer groove to a thickness of the cap plate may be in a range from approximately 0.01 to approximately 0.5.

The gasket may include a gasket body passing through the cap plate, may include an outer gasket extending from the gasket body and facing the outer surface, and may include an inner gasket extending from the gasket body and facing the inner surface, wherein the outer groove may surround the outer gasket.

The cap plate may further include a gasket groove that is concave from the outer surface toward the inner surface and supports the outer gasket, and the outer groove may surround the gasket groove.

A depth of the outer groove may be smaller than a depth of the gasket groove.

The outer groove and the gasket groove may be spaced apart from each other, and the outer surface may further include a support surface between the outer groove and the gasket groove.

The outer gasket may include a first outer gasket in the gasket groove, may include a second outer gasket extending from the first outer gasket and surrounding the terminal, and may include a third outer gasket extending from the second outer gasket and seated on the support surface.

The secondary battery may further include an inner groove that is concave from the inner surface toward the outer surface.

A width of the inner groove may be in a range from approximately 0.1 mm to approximately 1 mm.

A sum of a depth of the outer groove and a depth of the inner groove may be smaller than a thickness of the cap plate.

A ratio of a sum of a depth of the outer groove and a depth of the inner groove to a thickness of the cap plate may be in a range from approximately 0.01 to approximately 0.5.

The outer groove and the inner groove may be misaligned with respect to each other.

A distance from a central axis of the terminal to the inner groove may be smaller than a distance from the central axis of the terminal to the outer groove.

The gasket may include a gasket body passing through the cap plate, may include an outer gasket extending from the gasket body and facing the outer surface, and may include an inner gasket extending from the gasket body and facing the inner surface. The inner groove may surround the inner gasket.

In accordance with another aspect of the present disclosure, a secondary battery manufacturing method includes arranging a cap plate and a terminal between a first mold and a second mold, forming a cavity by moving the first mold toward the second mold, forming an outer groove by pressing an outer surface of the cap plate, and forming a gasket by injecting a resin into the cavity.

In the forming of the outer groove by pressing the outer surface of the cap plate, a first pressing protrusion protruding from the first mold toward the outer surface may be inserted into the outer groove.

The secondary battery manufacturing method may further include forming an inner groove by pressing an inner surface of the cap plate.

In the forming of the inner groove by pressing the inner surface of the cap plate, a second pressing protrusion protruding from the second mold toward the inner surface may be inserted into the inner groove.

In accordance with still another aspect of the present disclosure, a battery module includes a housing and two or more secondary batteries accommodated in the housing. Each of the secondary batteries includes a case, an electrode assembly accommodated in the case, a cap plate coupled to the case and including an inner surface facing the electrode assembly and an outer surface opposite to the inner surface, a terminal protruding outward from the cap plate and connected to the electrode assembly, a gasket between the cap plate and the terminal, and an outer groove that is concave from the outer surface toward the inner surface and surrounds the gasket.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic perspective view illustrating a configuration of a battery module according to one embodiment of the present disclosure;
FIG. 2 is a schematic perspective view illustrating a configuration of a secondary battery according to one embodiment of the present disclosure;
FIG. 3 is a schematic exploded perspective view illustrating the configuration of the secondary battery according to one embodiment of the present disclosure;
FIG. 4 is a schematic view illustrating a configuration of an electrode assembly according to one embodiment of the present disclosure;
FIG. 5 is a schematic enlarged view illustrating a configuration of a gasket according to one embodiment of the present disclosure;
FIG. 6 is a schematic enlarged view illustrating a configuration of an outer groove according to one embodiment of the present disclosure;
FIG. 7 is a schematic flowchart illustrating a secondary battery manufacturing method according to one embodiment of the present disclosure;
FIGS. 8 to 11 are schematic views illustrating a process of manufacturing the secondary battery according to one embodiment of the present disclosure;
FIG. 12 is a schematic cross-sectional view illustrating a configuration of a secondary battery according to another embodiment of the present disclosure;
FIG. 13 is a schematic enlarged view illustrating a configuration of an inner groove according to another embodiment of the present disclosure;
FIG. 14 is a schematic flowchart illustrating a secondary battery manufacturing method according to another embodiment of the present disclosure; and
FIGS. 15 to 18 are schematic views illustrating the secondary battery manufacturing method according to another embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

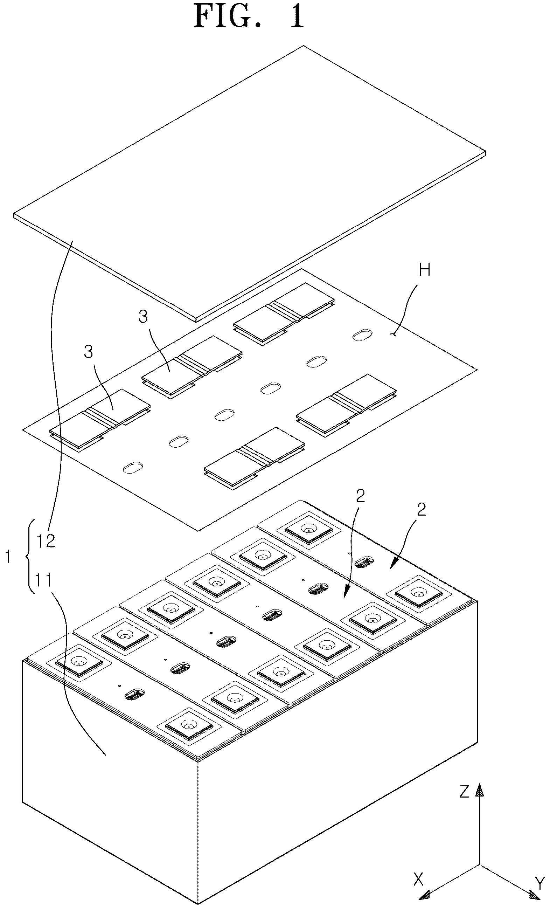

FIG. 1 is a schematic perspective view illustrating a configuration of a battery module according to one embodiment of the present disclosure.

Referring to FIG. 1, the battery module according to the present embodiment may include a housing 1 and one or more secondary batteries 2.

The housing 1 may form an overall exterior of the battery module and may provide a space in which the secondary battery 2 may be accommodated.

The housing 1 according to the present embodiment may include a housing body 11 and a cover 12.

The housing body 11 may be formed in a hollow box shape of which one side is open. The cross-sectional shape of the housing body 11 is not limited to the quadrangular shape illustrated in FIG. 1, and it may have any other suitable shape, such as a polygonal shape, a circular shape, or an elliptical shape.

The cover 12 may be coupled to the housing body 11 and close an inner space of the housing body 11. As an example, the cover 12 may have substantially a plate shape and may face the open side of the housing body 11. The cover 12 may be fixed to the housing body 11 by any of various coupling methods such as bolting, welding, and/or fitting.

The secondary battery 2 may function as a unit structure which stores and supplies power in the battery module. The secondary battery 2 may be accommodated in the housing 1.

In one or more embodiments, the battery module may include a plurality of secondary batteries 2. The plurality of secondary batteries 2 may be arranged in two or more rows in any one direction of a longitudinal direction (an X-axis direction in FIG. 1) or a width direction (a Y-axis direction in FIG. 1) of the housing 1. Although in the embodiment depict in FIG. 1 the plurality of secondary batteries 2 are arranged in six rows in the longitudinal direction of the housing 1, the arrangement of the plurality of secondary batteries 2 is not limited thereto, and the secondary batteries 2 may be arranged in any other suitable configuration. The plurality of secondary batteries 2 may be parallel (or substantially parallel) to each other. The configuration and number of the secondary batteries 2 may be changed according to a size, a shape, etc., of the housing 1.

The plurality of secondary batteries 2 may be electrically connected to each other by a busbar 3.

The busbar 3 according to the present embodiment may be between the cover 12 and the secondary battery 2. The busbar 3 may be provided as a plurality of busbars 3. Each of the busbars 3 may connect a pair of adjacent secondary batteries 2 in series or in parallel.

The busbar 3 may be formed of an electrically conductive material such as copper, aluminum, or nickel. The specific shape of the busbar 3 is not limited to the shape illustrated in FIG. 1, and it may have any configuration suitable for electrically connecting the adjacent secondary batteries 2.

The plurality of busbars 3 may be supported by a busbar holder H in the housing 1.

The busbar holder H according to the present embodiment may have a flat plate shape. The busbar holder H may be between the cover 12 and the secondary battery 2. The busbar 3 may be fixed to the busbar holder H by any of various coupling methods such as fitting, bolting, and/or injecting. The busbar holder H may include a polymer compound material which is electrically insulative.

Hereinafter, a secondary battery 2 according to various embodiments of the present disclosure will be described.

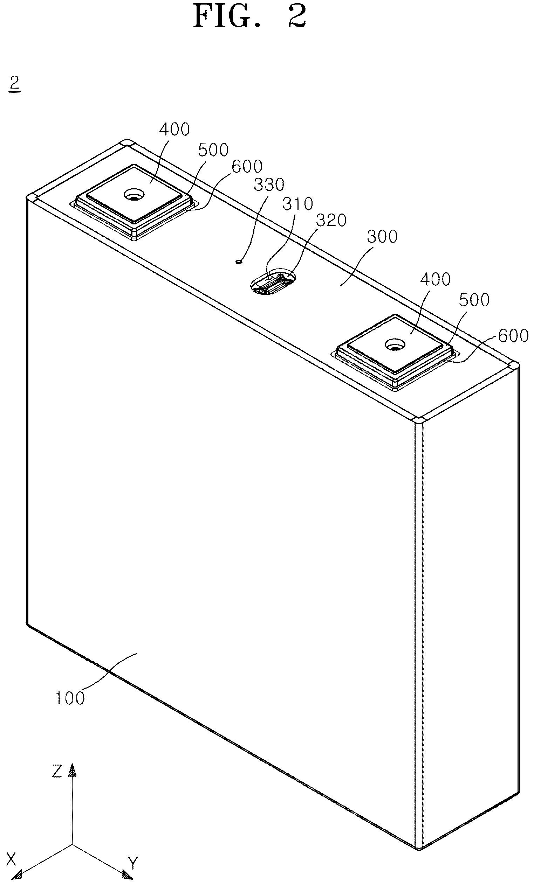

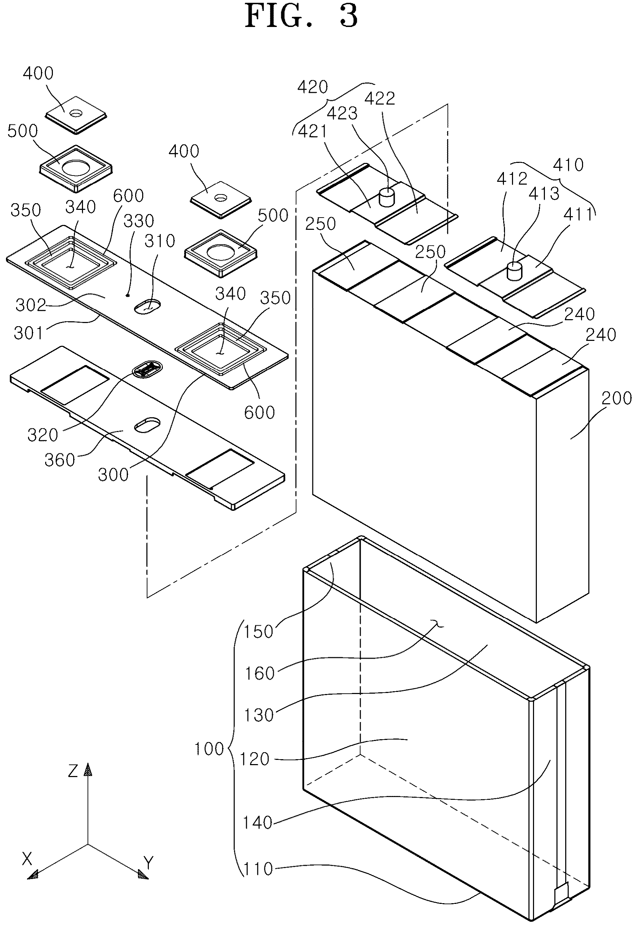

FIG. 2 is a schematic perspective view illustrating a configuration of a secondary battery according to one embodiment of the present disclosure, and FIG. 3 is a schematic exploded perspective view illustrating the configuration of the secondary battery according to one embodiment of the present disclosure.

Hereinafter, an example of a lithium-ion secondary battery will be described as the secondary battery. However, the present disclosure is not limited thereto, and the secondary battery may be a lithium polymer battery or a cylindrical battery.

Referring to FIGS. 2 and 3, a secondary battery 2 according to the present embodiment includes a case 100, an electrode assembly 200, a cap plate 300, a terminal 400, and a gasket 500.

The case 100 may form the overall exterior of the secondary battery 2 and may accommodate the electrode assembly 200.

The case 100 according to the present embodiment may include a bottom portion 110, a front portion 120, a rear portion 130, a first side portion 140, and a second side portion 150.

The bottom portion 110 may form a lower exterior of the case 100 (see FIG. 3). The bottom portion 110 according to the present embodiment may have a rectangular plate shape. The bottom portion 110 of the case 100 may be seated on a bottom surface of the housing body 11.

The front portion 120, the rear portion 130, the first side portion 140, and the second side portion 150 may form the exterior of a peripheral surface of the case 100.

Each of the front portion 120, the rear portion 130, the first side portion 140, and the second side portion 150 according to the present embodiment may have a plate shape extending upward from an edge of the bottom portion 110 (see FIG. 3). The front portion 120, the rear portion 130, the first side portion 140, and the second side portion 150 may surround an upper space of the bottom portion 110. The front portion 120, the rear portion 130, the first side portion 140, and the second side portion 150 may be arranged to form a rectangular cross-sectional shape.

The front portion 120 and the rear portion 130 may face each other in a longitudinal direction of the housing 1. The front portion 120 and the rear portion 130 may be parallel (or substantially parallel) to each other. Areas of the front portion 120 and the rear portion 130 may be the same (or substantially the same).

The first side portion 140 and the second side portion 150 may face each other in a width direction of the housing 1. The first side portion 140 and the second side portion 150 may be parallel (or substantially parallel) to each other. Areas of the first side portion 140 and the second side portion 150 may be the same (or substantially the same). The areas of the first side portion 140 and the second side portion 150 may be smaller than the areas of the front portion 120 and the rear portion 130.

The case 100 may further include an opening 160. The opening 160 according to the present embodiment may be a space surrounded by upper end portions of the front portion 120, the rear portion 130, the first side portion 140, and the second side portion 150. The opening 160 may connect an inner space to an outer space of the case 100.

Accordingly, the case 100 according to the present embodiment may have a rectangular hexahedral shape of which an upper side is open.

A first direction to be described below may be parallel to a Z-axis and may be a direction from the bottom portion 110 toward the opening 160 in FIGS. 2 and 3. A second direction may be parallel to a Y-axis and may be a direction from the second side portion 150 toward the first side portion 140 in FIGS. 2 and 3. A third direction may be parallel to an X-axis and may be a direction from the rear portion 130 toward the front portion 140 in FIGS. 2 and 3.

The electrode assembly 200 may function as a unit structure which charges and discharges power in the secondary battery. The electrode assembly 200 may be accommodated in the case 100.

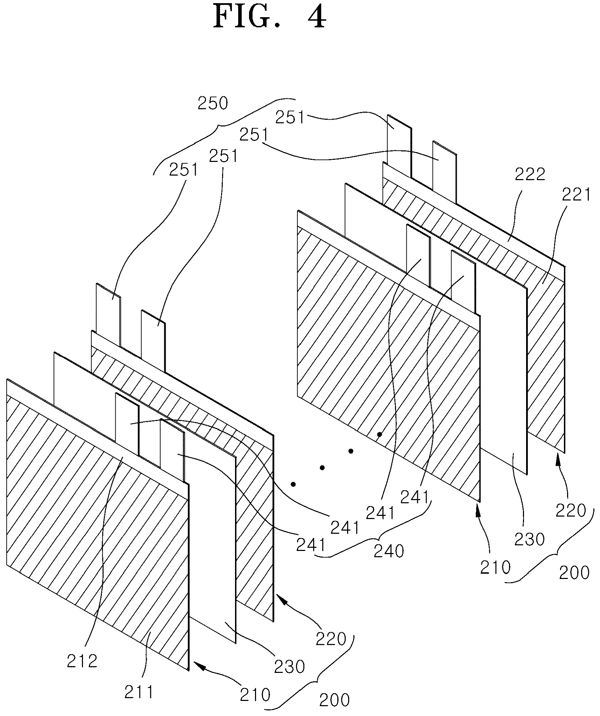

FIG. 4 is a schematic view illustrating a configuration of the electrode assembly 200 according to one embodiment of the present disclosure.

Referring to FIGS. 2 to 4, the electrode assembly 200 according to the present embodiment may include a first electrode 210, a second electrode 220, and a separator 230 between the first electrode 210 and the second electrode 220. The first electrode 210, the separator 230, and the second electrode 220 may be provided as a plurality of first electrodes 210, a plurality of separators 230, and a plurality of second electrodes 220.

Hereinafter, an example of the electrode assembly 200 with a stack shape in which the plurality of first electrodes 210, the plurality of separators 230, and the plurality of second electrodes 220 are sequentially stacked in the third direction (X-axis direction) will be described. However, the shape of the electrode assembly 200 is not limited thereto, and the first electrodes 210, the separators 230, and the second electrodes 220 may be wound around a winding axis clockwise or counterclockwise in a stacked state.

The first electrode 210 may function as any one of a positive electrode or negative electrode of the electrode assembly 200. Hereinafter, an example of the first electrode 210 which is the positive electrode of the electrode assembly 200 will be described. However, the first electrode 210 is not limited thereto and may function as the negative electrode of the electrode assembly 200.

The first electrode 210 according to the present embodiment may be formed in the form of a foil including a metal material such as aluminum or an aluminum alloy. The type, size, and shape of the first electrode 210 are not specifically limited as long as the first electrode 210 has conductivity without causing a chemical change of the secondary battery. A design of a cross-sectional shape of the first electrode 210 may be changed to any of various shapes other than the rectangular shape illustrated in FIG. 4.

The first electrode 210 may be provided as a plurality of first electrodes 210. The plurality of first electrodes 210 may be between the front portion 120 and the rear portion 130 of the case 100 in the third direction (X-axis direction). The configuration and number of first electrodes 210 may be variously changed according to a charging capacity of the secondary battery 2 or the like.

At least a portion of the first electrode 210 may be coated with a first active material layer 211. Both surfaces of the first electrode 210 may be coated with the first active material layer 211. Alternatively, only one surface of the first electrode 210 may be coated with the first active material layer 211.

In the present embodiment, as the first electrode 210 functions as the positive electrode, the first active material layer 211 may include a positive electrode active material.

The positive electrode active material may be a compound capable of reversible intercalation and deintercalation of lithium (a lithiated intercalation compound). In one or more embodiments, as the positive electrode active material, one or more of composite oxides of a metal selected from the group consisting of cobalt, manganese, nickel, iron, or a combination thereof and lithium may be used.

As an example, the positive electrode active material may include at least one of lithium-iron-phosphorus oxide (LiFePO4, LFP), lithium-manganese-iron-phosphorus oxide (LiMnFePO4, LMFP), or lithium-nickel-cobalt-manganese oxide (LiNixCoyMnzO2, NCM). In one or more embodiments, the relationships 0 < x < 1, 0 < y <1, 0 < z < 1, and x+y+z = 1 may be satisfied. The positive electrode active material may include only one of lithium-iron-phosphorus oxide (LiFePO4, LFP), lithium-manganese-iron-phosphorus oxide (LiMnFePO4, LMFP), or lithium-nickel-cobalt-manganese oxide (LiNixCoyMnzO2, NCM), or may include two of these materials, or may include all of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM).

The first active material layer 211 may further include a positive electrode conductive material.

The positive electrode conductive material is used to impart conductivity to the first active material layer 211, and any electronically conductive material that does not cause a chemical change may be used. Examples of the positive electrode conductive material may include carbon-based materials such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, and the like, conductive polymers such as polyphenylene derivatives, or a mixture thereof.

The first active material layer 211 may further include a positive electrode binder.

The positive electrode binder serves to attach the particles constituting the positive electrode active material to each other and to also attach the positive electrode active material to the first electrode 210.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

In an embodiment in which the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, or an alkali metal salt thereof may be mixed and used. The alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The first electrode 210 may include a first non-coating portion 212 which is not coated with the first active material layer 211. The first non-coating portion 212 according to the present embodiment may be in a region of an upper end portion of the first electrode 210 facing the opening 160 in the case 100. However, the shape of the first non-coating portion 212 is not limited thereto, and the first non-coating portion 212 may be formed on an entire edge region of the first electrode 210.

The second electrode 220 may function as the other of the positive electrode or the negative electrode of the electrode assembly 200. Hereinafter, an example of the second electrode 220 which is the negative electrode of the electrode assembly 200 will be described. However, the second electrode 220 is not limited thereto and may function as the positive electrode of the electrode assembly 200.

The second electrode 220 may be provided as a plurality of second electrodes 220. The plurality of second electrodes 220 may be between the front portion 120 and the rear portion 130 of the case 100 in the third direction (X-axis direction). The first electrode 210 and the second electrode 220 may be alternately arranged in the third direction. The second electrode 220 may be spaced a predetermined distance from the first electrode 210 in the third direction (X-axis direction).

The second electrode 220 according to the present embodiment may be a foil including a metal material such as copper, a copper alloy, nickel, or a nickel alloy. The type, size, and shape of the second electrode 220 are not specifically limited as long as the second electrode 220 has conductivity without causing a chemical change of the secondary battery. The cross-sectional shape of the second electrode 220 may be changed to any of various shapes other than the rectangular shape illustrated in FIG. 4.

At least a portion of the second electrode 220 may be coated with a second active material layer 221. Both surfaces of the second electrode 220 may be coated with the second active material layer 221. Alternatively, only one surface of the second electrode 220 may be coated with the second active material layer 221.

Because the second electrode 220 functions as the negative electrode, the second active material layer 221 may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite such as amorphous, plate-like, flake-like, spherical, or fiber-like natural graphite or artificial graphite, and examples of the amorphous carbon may include soft carbon, hard carbon, mesophase pitch carbide, calcined coke, or the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedepoing of lithium, a Si-based negative electrode active material or a Sn-based negative electrode active material may be used. The Si-based negative electrode active material may be silicon, a silicon-carbon composite, SiOx (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOx(0 < x ≤ 2, e.g., SnO2), a Sn-based alloy, or a combination thereof.

The silicon-carbon composite may be a composite of silicon and amorphous carbon. According to one embodiment, the silicon-carbon composite may be in the form of silicon particles and amorphous carbon coated on surfaces of the silicon particles. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, such that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material or Sn-based negative electrode active material may be used in combination with a carbon-based negative electrode active material.

The second active material layer 221 may further include a negative electrode conductive material and a negative electrode binder.

The negative electrode conductive material is used to impart conductivity to the second active material layer 221, and any electronically conductive material that does not cause a chemical change may be used. Examples of the negative electrode conductive material may include carbon-based materials such as natural graphite, artificial graphite, carbon black, acetylene black, Ketjen black, carbon fibers, carbon nanofibers, or carbon nanotubes, metal-based materials in the form of a metal powder or metal fibers containing copper, nickel, aluminum, silver, or the like, conductive polymers such as polyphenylene derivatives, or a mixture thereof.

The negative electrode binder is configured to attach particles constituting the negative electrode active material and to attach the negative electrode active material to the second electrode 220.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

In an embodiment in which the aqueous binder is used as the negative electrode binder, the aqueous binder may further include a cellulose series compound capable of providing viscosity. As the cellulose series compound, one or more of carboxymethyl cellulose, hydroxypropylmethyl cellulose, methyl cellulose, or an alkali metal salt thereof may be mixed and used. The alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode 220 may include a second non-coating portion 222 which is not coated with the second active material layer 221. The second non-coating portion 222 according to the present embodiment may be in a region of an upper end portion of the second electrode 220 facing the opening 160 in the case 100. However, the shape of the second non-coating portion 222 is not limited thereto, and the second non-coating portion 222 may be on an entire edge region of the second electrode 220.

The separator 230 may be between the first electrode 210 and the second electrode 220. The separator 230 may be configured to allow lithium ions to move between the first electrode 210 and the second electrode 220 and to prevent a short circuit between the first electrode 210 and the second electrode 220.

The separator 230 may entirely surround a surface region of the electrode assembly 200. Accordingly, the separator 230 may prevent the first electrode 210 and the second electrode 220 from being directly exposed to the outside of the electrode assembly 200.

The separator 230 may be made of (or include) polyethylene, polypropylene, polyvinylidene fluoride, or a multilayer film of two or more layers thereof, and a mixed multilayer film such as a two-layer separator of polyethylene/polypropylene, a three-layer separator of polyethylene/polypropylene/polyethylene, or a three-layer separator of polypropylene/polyethylene/polypropylene may be utilized.

The separator 230 may include a porous substrate and a coating layer including an organic material, an inorganic material, or a combination thereof, which is positioned on one surface or both surfaces of the porous substrate.

The porous substrate may be a polymer film made of (or including) one polymer selected from polyolefins such as polyethylene or polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, or polytetrafluoroethylene, or a copolymer or mixture of two or more of the above materials.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, or a combination thereof, but the present disclosure is not limited thereto.

The organic material and the inorganic material may be mixed in one coating layer or may be in the form of a coating layer including (or containing) an organic material and a coating layer including (or containing) an inorganic material which are stacked on each other.

The electrode assembly 200 according to the present embodiment may further include a first tab member 240 and a second tab member 250.

The first tab member 240 may be connected to the first electrode 210 and protrude outward from the electrode assembly 200. In an embodiment in which the first electrode 210 is the positive electrode, the first tab member 240 may function as a positive electrode tab of the secondary battery 2. However, the first tab member 240 is not limited thereto, and in an embodiment in which the first electrode 210 is the negative electrode, the first tab member 240 may function as a negative electrode tab of the secondary battery 2.

The first tab member 240 according to the present embodiment may extend from the electrode assembly 200 in the first direction (Z-axis). As an example, the first tab member 240 may extend toward the opening 160 in the case 100.

The first tab member 240 according to the present embodiment may be provided as a plurality of first tab members 240. The plurality of first tab members 240 may be spaced apart from each other in the second direction (Y-axis). Although an example of the first tab members 240 including two first tab members 240 is illustrated in FIG. 3, the number of the first tab members 240 is not limited thereto, and the electrode assembly 200 may include any other suitable number of first tab members 240 on each of the first electrodes 210, such as three or four.

The first tab member 240 may include a first tab 241.

The first tab 241 according to the present embodiment may be a foil extending from the first non-coating portion 212 of the first electrode 210 in the first direction (Z-axis). The first tab 241 may have a substantially rectangular shape. However, the shape of the first tab 241 is not limited thereto, and the first tab 241 may have any other suitable shape.

The first tab 241 may be integral with the first electrode 210. For example, the first tab 241 may be a region of the first non-coating portion 212 which remains after a portion of a region of the first non-coating portion 212 is cut or removed by a notching process or the like. Alternatively, the first tab 241 may be manufactured separately from the first electrode 210 and then connected (coupled) to the first non-coating portion 212 by welding or the like. A material of the first tab 241 may be the same as the material of the first electrode 210.

The first tab 241 may be provided as a plurality of first tabs 241. The number of the first tabs 241 may be the same as the number of the first electrodes 210. Each of the first tabs 241 may individually extend from one of the first non-coating portions 212 of the different first electrodes 210. The adjacent first tabs 241 may face each other in the third direction (X-axis). The adjacent first tabs 241 may be parallel (or substantially parallel) to each other. Accordingly, the first tab members 240 according to the present embodiment may be an assembly of the plurality of first tabs 241 stacked in the third direction (X-axis). The adjacent first tabs 241 may be in contact with each other and also spaced apart from each other by a thickness of the separator 230.

The second tab member 250 may be connected to the second electrode 220 and protrude outward from the electrode assembly 200. In an embodiment in which the second electrode 220 is the negative electrode, the second tab member 250 may function as the negative electrode tab of the secondary battery 2. However, the second tab member 250 is not limited thereto, and in an embodiment in which the second electrode 220 is the positive electrode, the second tab member 250 may function as the positive electrode tab of the secondary battery 2.

The second tab member 250 according to the present embodiment may extend from the electrode assembly 200 in the first direction (Z-axis). That is, the second tab member 250 may extend toward the opening 160 in the case 100.

The first tab member 240 and the second tab member 250 may be spaced apart from each other in the second direction (Y-axis). As an example, the second tab member 250 may be spaced a predetermined distance from the first tab member 240 in the second direction (Y-axis).

The second tab member 250 according to the present embodiment may be provided as a plurality of second tab members 250. The plurality of second tab members 250 may be spaced apart from each other in the second direction (Y-axis). Although an example of the second tab member 250 formed as two second tab member 250 is illustrated in FIG. 3, the number of the second tab members 250 is not limited thereto, and each second electrode 220 may have any other suitable number of second tab members 250, such as three or four.

The second tab member 250 may include second tabs 251.

The second tab 251 according to the present embodiment may be a foil extending from the second non-coating portion 222 of the second electrode 220 in the first direction. The second tab 251 may have a substantially rectangular shape. However, the shape of the second tab 251 is not limited thereto, and it may have any other suitable shape.

The second tab 251 may be integral with the second electrode 220. For example, the second tab 251 may be a region of the second non-coating portion 222 which remains after a region of a portion the second non-coating portion 222 is cut or removed by a notching process. Alternatively, the second tab 251 may be manufactured separately from the second electrode 220 and then connected (coupled) to the second non-coating portion 222 by welding or the like. A material of the second tab 251 may be the same as the material of the second electrode 220.

The second tab 251 may be provided as a plurality of second tabs 251. The number of the second tabs 251 may be the same as the number of the second electrodes 220. Each of the second tabs 251 may extend from one of the second non-coating portions 222 of the different second electrodes 220. The adjacent second tabs 251 may face each other in the third direction (X-axis). The adjacent second tabs 251 may be parallel (or substantially parallel) to each other. Accordingly, the second tab member 250 according to the present embodiment may be an assembly of the plurality of second tabs 251 stacked in the third direction (X-axis). The adjacent second tabs 251 may be in contact with each other or may be spaced apart from each other by a thickness of the separator 230.

The cap plate 300 may be coupled to the case 100 and may seal the case 100.

The cap plate 300 according to the present embodiment may have a flat plate shape. The cap plate 300 may be in the opening 160 of the case 100. The cap plate 300 may face the electrode assembly 200 in the first direction (Z-axis). The cap plate 300 may be spaced a predetermined distance from the electrode assembly 200 in the first direction (Z-axis). The cap plate 300 may be parallel (substantially parallel) to the bottom portion 110 of the case 100.

The cap plate 300 may be seated on an upper end portion of the case 100 (e.g., on the upper end portions of the front portion 120, the rear portion 130, the first side portion 140, and the second side portion 150). The cap plate 300 may be coupled to the case 100 by any suitable coupling method, such as welding, bolting, and fitting.

The cap plate 300 may include an inner surface 301 and an outer surface 302 which are opposite to each other.

The inner surface 301 and the outer surface 302 of the cap plate 300 may be spaced apart from each other in the first direction (Z-axis). The inner surface 301 may face the electrode assembly 200.

The inner surface 301 may be a lower surface of the cap plate 300 facing an upper surface of the electrode assembly 200 from which the first tab member 240 and the second tab member 250 protrude.

The outer surface 302 may face the exterior space surrounding (outside of) the case 100. The outer surface 302 may be an upper surface that is opposite to the inner surface 301 of the cap plate 300.

A vent hole 310 and a vent 320 may be in the cap plate 300 according to one embodiment of the present disclosure.

The vent hole 310 according to the present embodiment may be a hole vertically passing through the inner surface 301 and the outer surface 302 of the cap plate 300 in the first direction (Z-axis). The vent hole 310 may be configured to function as a portion which provides a path through which flames, gas, smoke, etc., generated in the case 100, in response to a thermal runaway occurring due to an overcurrent or the like in the secondary battery 2, are discharged to the outside of the case 100. The vent hole 310 may have any suitable cross-sectional shape, such as an elliptical shape, a circular shape, or a polygonal shape.

The vent 320 may be in the vent hole 310 and opened or closed in response to a change in internal pressure of the case 100. When the secondary battery 2 operates normally, the vent 320 may close the vent hole 310 to block an electrolyte, etc., in the case 100 from leaking to the outside of the case 100 or block moisture, foreign matter, etc., from being introduced from the outside into the case 100. In response to a thermal runaway of the secondary battery 2 occurring, the vent 320 may open the vent hole 310 to guide flames, gas, smoke, etc., generated in the case 100 to be discharged to the outside of the case 100.

The vent 320 according to the present embodiment may have substantially a plate shape. The vent 320 may be fixed to the cap plate 300 by any of various coupling methods such as welding, bolting, and fitting. The vent 320 may be in the vent hole 310 or may face the vent hole 310 in the first direction (Z-axis) at an upper side or a lower side of the cap plate 300.

A thickness of the vent 320 in a direction parallel to the first direction may be smaller than a thickness of the cap plate 300. Accordingly, the vent 320 may readily burst or rupture in response to an internal pressure of the case 100 increasing. The vent 320 may include a notch that is concave inward from the vent 320 and that is configured to be ruptured first in response to the internal pressure of the case 100 increasing.

An electrolyte injection hole 330, which may pass through the cap plate 300 according to the present embodiment and in which a sealing stopper may be provided, may be in the cap plate 300. The electrolyte injection hole 330 may be spaced a predetermined distance from the vent hole 310 in the second direction (Y-axis) or a direction opposite to the second direction.

One or more terminal holes 340 may be in the cap plate 300 according to the present embodiment.

The terminal hole 340 may be a hole passing through the inner surface 301 and the outer surface 302 of the cap plate 300 in the first direction (Z-axis). The terminal hole 340 may be provided as a pair of terminal holes 340. The pair of terminal holes 340 may be spaced a predetermined distance from each other in the second direction (Y-axis). The vent hole 310 and the electrolyte injection hole 330 may be between the pair of terminal holes 340.

An insulating plate 360 may be between the cap plate 300 and the electrode assembly 200 according to the present embodiment. The insulating plate 360 may be configured to prevent the cap plate 300 from coming into direct contact with the electrode assembly 200 to insulate the cap plate 300 from the electrode assembly 200. The insulating plate 360 may fix a location of the electrode assembly 200 in the case 100. In response to the cap plate 300 being deformed toward the inside of the case 100 due to an external impact, etc., the insulating plate 360 may prevent (or at least mitigate) damage to the electrode assembly 200.

The insulating plate 360 according to the present embodiment may face the electrode assembly 200 in the first direction in the case 100. The electrode assembly 200, the insulating plate 360, and the cap plate 300 may be sequentially stacked in the first direction (Z-axis). The insulating plate 360 may be fixed to an inner surface of the case 100 by any suitable coupling method, such as press fitting, welding, bolting, and/or bonding. The insulating plate 360 may be in contact with one surface of the electrode assembly 200 from which the first tab member 240 and the second tab member 250 extend. The insulating plate 360 may be formed of an insulating material such as polyethylene (PE), polypropylene (PP), polyethylene terephthalate (PET), or rubber.

The terminal 400 may be configured to function as a part through which the secondary battery 2 is electrically connected to a busbar 3 or external power device.

The terminal 400 according to the present embodiment may be formed of (or include) an electrically conductive material such as aluminum, nickel, or copper. The terminal 400 may protrude outward from the cap plate 300. In one or more embodiments, the terminal 400 may be spaced a predetermined distance from the outer surface 302 of the cap plate 300 in the first direction (Z-axis). A lower surface of the terminal 400 may face the terminal hole 340 and pass through the cap plate 300. A cross-sectional area of the terminal 400 may be greater than a cross-sectional area of the terminal hole 340. Although an example of the terminal 400 having a quadrangular cross-sectional shape is illustrated in the drawings, the cross-sectional shape of the terminal 400 is not limited thereto, and the terminal 400 may have any other suitable cross-sectional shape, such as a circular shape, an elliptical shape, or a polygonal shape.

The terminal 400 may be a pair of terminals 400. The pair of terminals 400 may be spaced a predetermined distance from each other in the second direction (Y-axis). The pair of terminals 400 may face each other in the second direction with the vent hole 310 therebetween. Lower surfaces of the pair of terminals 400 may face the different terminal holes 340. The pair of terminals 400 may face the first tab member 240 and the second tab member 250, respectively, in the first direction through the different terminal holes 340.

The busbar 3 may be on an upper surface of the terminal 400. The busbar 3 may be coupled (e.g., integrally bonded) to the terminal 400 by laser welding or the like.

The pair of terminals 400 may be individually connected to the first electrode 210 and the second electrode 220, respectively, of the electrode assembly 200. Accordingly, the pair of terminals 400 may individually function as a positive electrode terminal and a negative electrode terminal of the secondary battery 2.

In one or more embodiments, the pair of terminals 400 may be electrically connected to the first electrode 210 and the second electrode 220 by a first connection member 410 and a second connection member 420, respectively.

The first connection member 410 may be between the electrode assembly 200 and the cap plate 300. The first connection member 410 may connect one of the terminals 400 to the first tab member 240 The first connection member 410 may be formed of (or include) an electrically conductive material. The first connection member 410 may be formed of (or include) the same material as the terminal 400.

The first connection member 410 according to the present embodiment may include a first current collecting plate 411, first tab connection portions 412, and a first terminal connection portion 413.

The first current collecting plate 411 may be between the first tab member 240 and the inner surface 301 of the cap plate 300. A lower surface of the first current collecting plate 411 may face, in the first direction (Z-axis), a space formed between a pair of first tab members 240 adjacent to each other in the second direction (Y-axis). An upper surface of the first current collecting plate 411 may face one terminal 400 of the pair of terminals 400 through the terminal hole 340.

The first tab connection portion 412 may extend from the first current collecting plate 411 and may be connected to the first tab member 240.

The first tab connection portion 412 according to the present embodiment may be a pair of first tab connection portions 412. The pair of first tab connection portions 412 may extend from both end portions of the first current collecting plate 411 in the second direction (Y-axis) and in the direction opposite to the second direction. Each of the first tab connection portions 412 may face one of the different first tab members 240 in the first direction. Each of the first tab connection portions 412 may be individually in contact with an end surface of one of the different first tab members 240. The first tab members 240 and the first tab connection portion 412 may be bonded to each other by laser welding or any other suitable method or technique.

The first terminal connection portion 413 may extend from the first current collecting plate 411 and may be connected to the terminal 400.

The first terminal connection portion 413 according to the present embodiment may have a column shape extending from the upper surface of the first current collecting plate 411 facing the terminal hole 340 in the first direction. An upper end portion of the first terminal connection portion 413 may pass through the terminal hole 340 and may be in contact with the lower surface of the terminal 400 facing the first tab member 240. The first terminal connection portion 413 may have any suitable cross-sectional shape, such as an elliptical shape or a polygonal shape other than the circular shape illustrated in the drawing. The upper end portion of the first terminal connection portion 413 may be coupled (e.g., bonded) to the lower surface of the terminal 400 by laser welding.

The second connection member 420 may be between the electrode assembly 200 and the cap plate 300. The second connection member 420 may connect one of the terminals 400 to the second tab member 250. The second connection member 420 may be formed of (or include) an electrically conductive material. The second connection member 420 may be formed of (or include) the same material as the terminal 400. The first connection member 410 and the second connection member 420 may be spaced a predetermined distance from each other in the second direction.

The second connection member 420 according to the present embodiment may include a second current collecting plate 421, second tab connection portions 422, and a second terminal connection portion 423.

The second current collecting plate 421 may be between the second tab member 250 and an inner surface 301 of the cap plate 300. A lower surface of the second current collecting plate 421 may face, in the first direction, a space formed between a pair of second tab members 250 adjacent to each other in the second direction. An upper surface of the second current collecting plate 421 may face the other terminal 400 of the pair of terminals 400 through the terminal hole 340.

The second tab connection portion 422 may extend from the second current collecting plate 421 and may be connected to the second tab member 250.

The second tab connection portion 422 according to the present embodiment may include a pair of second tab connection portions 422. The pair of second tab connection portions 422 may extend from both end portions of the second current collecting plate 421 in the second direction and in the direction opposite to the second direction. Each of the second tab connection portions 422 may face one of the different second tab members 250 in the first direction. Each of the second tab connection portions 422 may be individually in contact with an end surface of one of the different second tab members 250. The second tab members 250 and the second tab connection portions 422 may be bonded to each other by laser welding.

The second terminal connection portion 423 may extend from the second current collecting plate 421 and may be connected to the terminal 400.

The second terminal connection portion 423 according to the present embodiment may have a columnar shape extending from the upper surface of the second current collecting plate 421 facing the terminal hole 340 in the first direction. An upper end portion of the second terminal connection portion 423 may pass through the terminal hole 340 and may be in contact with the lower surface of the terminal 400 facing the second tab member 250. The second terminal connection portion 423 may have any suitable cross-sectional shape, such as an elliptical shape or a polygonal shape other than the circular shape illustrated in the drawing. The upper end portion of the second terminal connection portion 423 may be coupled (e.g., bonded) to the lower surface of the terminal 400 by laser welding.

The gasket 500 may be between the cap plate 300 and the terminal 400. The gasket 500 may be configured to function as a part for mutually electrically insulating the cap plate 300 from the terminal 400. The gasket 500 may be formed of (or include) an insulating material such as PE, PP, PET, or rubber.

The gasket 500 may include a pair of gaskets 500. One gasket 500 of the pair of gaskets 500 may be between the terminal 400 connected to the first connection member 410 and the cap plate 300. The other gasket 500 of the pair of gaskets 500 may be between the terminal 400 connected to the second connection member 420 and the cap plate 300. The gaskets 500 may be formed by injection molding.

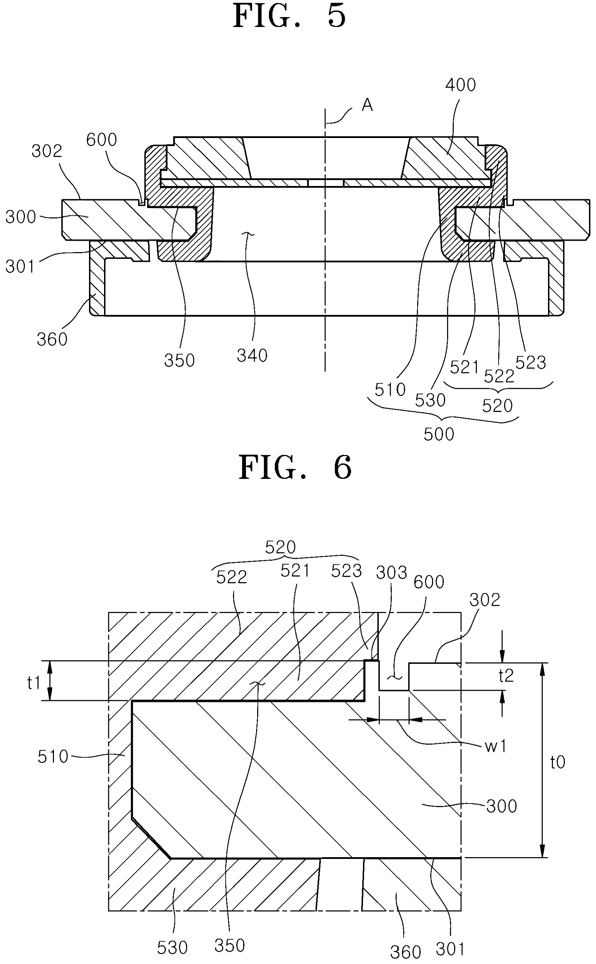

FIG. 5 is a schematic enlarged view illustrating a configuration of the gasket 500 according to one embodiment of the present disclosure.

Hereinafter, an example of the gasket 500 between the terminal 400 connected to the first connection member 410 and the cap plate 300 among the pair of gaskets 500 will be described. The following description of the gasket 500 may be equally applied to the gasket 500 between the terminal 400 connected to the second connection member 420 and the cap plate 300.

Referring to FIG. 5, the gasket 500 according to the present embodiment may include a gasket body 510, an outer gasket 520, and an inner gasket 530.

The gasket body 510 may form a middle exterior of the gasket 500 and support the outer gasket 520 and the inner gasket 530.

The gasket body 510 according to the present embodiment may be between the terminal 400 and the electrode assembly 200. The gasket body 510 may pass through the cap plate 300 through the terminal hole 340. A central axis of the gasket body 510 may be coaxial with a central axis A of the terminal 400. A hollow opening passing through the gasket body 510 in the first direction may be formed in a central portion of the gasket body 510. Each of the first terminal connection portion 413 of the first connection member 410 and the second terminal connection portion 423 of the second connection member 420 may be in contact with the lower surface of the terminal 400 through the hollow of the gasket body 510. An outer peripheral surface of the gasket body 510 may be in close contact with an inner peripheral surface of the cap plate 300 surrounding the terminal hole 340.

The outer gasket 520 may extend from the gasket body 510 toward the outside of the cap plate 300. The outer gasket 520 may face the outer surface 302 of the cap plate 300 and support the terminal 400.

The outer gasket 520 according to the present embodiment may include a first outer gasket 521, a second outer gasket 522, and a third outer gasket 523.

The first outer gasket 521 may be connected to the gasket body 510 and seated on the outer surface 302 of the cap plate 300.

The first outer gasket 521 according to the present embodiment may be in a gasket groove 350 that is concave from the outer surface 302 toward the inner surface 301 of the cap plate 300.

The gasket groove 350 according to the present embodiment may be connected to the terminal hole 340. A lower end portion of the gasket groove 350 may mutually communicate with an upper end portion of the terminal hole 340. A central axis of the gasket groove 350 may be coaxial with a central axis of the terminal hole 340. A cross-sectional area of the gasket groove 350 may be greater than the cross-sectional area of the terminal hole 340. Accordingly, the gasket groove 350 may entirely surround the terminal hole 340.

The first outer gasket 521 may extend from an upper end portion of the gasket body 510 in a radial direction of the gasket body 510 and may be in close contact with a bottom surface and an inner peripheral surface of the gasket groove 350.

The second outer gasket 522 may extend from the first outer gasket 521 and may surround the terminal 400.

The second outer gasket 522 according to the present embodiment may extend from the first outer gasket 521 in the first direction. An inner circumferential surface of the second outer gasket 522 may be disposed to face an outer circumferential surface of the terminal 400. The inner circumferential surface of the second outer gasket 522 may be in close contact with the outer circumferential surface of the terminal 400 and support the terminal 400.

The third outer gasket 523 may extend from the second outer gasket 522 in a direction parallel (or substantially parallel) to the outer surface 302. The third outer gasket 523 may be seated on a support surface 303 at one side of the outer surface 302. The support surface 303 may be a region of a portion of the outer surface 302 located between the gasket groove 350 and an outer groove 600, which will be described below, on an entire region of the outer surface 302. Accordingly, the third outer gasket 523 may prevent (or at least mitigate) a stepped section in an outer peripheral region of the gasket groove 350 from being directly exposed to the outside and to thereby prevent (or at least mitigate) damage to the cap plate 300.

The inner gasket 530 may extend from the gasket body 510 to the inside of the cap plate 300, that is, the inner space of the case 100. The inner gasket 530 may face the inner surface 301 of the cap plate 300.

The inner gasket 530 according to the present embodiment may extend from a lower end portion of the gasket body 510 in a direction parallel (or substantially parallel) to the inner surface 301 of the cap plate 300. The inner gasket 530 may be in close contact with the inner surface 301 of the cap plate 300. An end portion of the inner gasket 530 may be spaced a predetermined distance from the insulating plate 360.

The outer groove 600 may be configured to function as a portion which blocks a resin from leaking through a gap between a mold and the outer surface 302 when the gasket 500 is injection-molded. Accordingly, the outer groove 600 may prevent (or at least mitigate) burrs from being generated in an edge region of the gasket 500 due to leaking of the resin when the gasket 500 is injection-molded.

FIG. 6 is a schematic enlarged view illustrating a configuration of the outer groove according to one embodiment of the present disclosure;

Referring to FIGS. 5 and 6, the outer groove 600 according to the present embodiment may have a groove shape that is concave from the outer surface 302 of the cap plate 300 toward the inner surface 301. The outer groove 600 may have a band shape surrounding the entire outer periphery of the gasket groove 350. Accordingly, the outer groove 600 may entirely surround the gasket 500 accommodated in the gasket groove 350 (e.g., the outer gasket 520).

The outer groove 600 may be spaced a predetermined distance from the gasket groove 350. Accordingly, the support surface 303 on which the third outer gasket 523 is seated may be between the outer groove 600 and the gasket groove 350.

A depth t2 of the outer groove 600 may be smaller than a depth t1 of the gasket groove 350. A ratio (t2/t0) of the depth t2 of the outer groove 600 to a thickness t0 of the cap plate 300 may be in a range from approximately 0.01 to approximately 0.5.

In an embodiment in which the ratio of the depth t2 of the outer groove 600 to the thickness t0 of the cap plate 300 is smaller than approximately 0.01, the resin may leak through the gap between the mold and the outer surface 302 and may generate burrs in the edge region of the gasket 500 when the gasket 500 is injection-molded.

In an embodiment in which the ratio of the depth t2 of the outer groove 600 to the thickness t0 of the cap plate 300 is greater than approximately 0.05, the rigidity of the cap plate 300 may be excessively weakened.

A width w1 of the outer groove 600 may be in a range from approximately 0.1 mm to approximately 1 mm.

In an embodiment in which the width w1 of the outer groove 600 is smaller than approximately 0.1 mm, the resin may leak through the gap between the mold and the outer surface 302 and generate burrs in the edge region of the gasket 500 when the gasket 500 is injection-molded.

In an embodiment in which the width w1 of the outer groove 600 is greater than approximately 0.1 mm, the rigidity of the cap plate 300 may be excessively weakened.

Hereinafter, a secondary battery manufacturing method according to one embodiment of the present disclosure will be described.

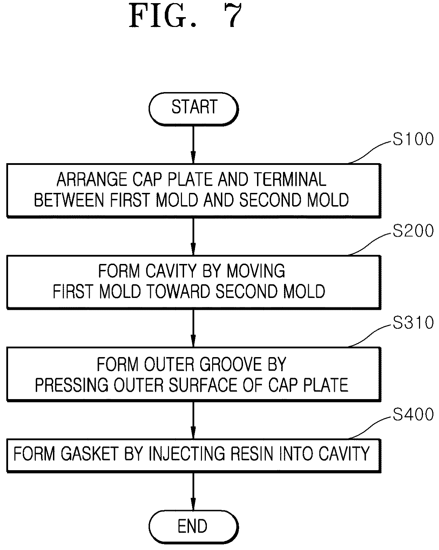

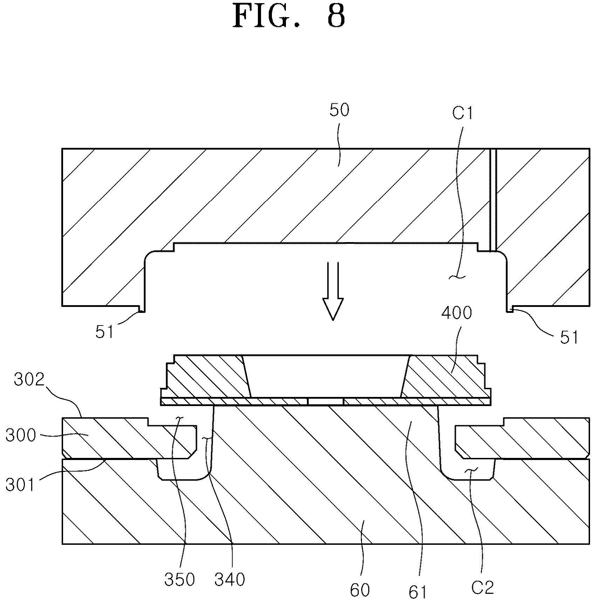

FIG. 7 is a schematic flowchart illustrating aspects of a secondary battery manufacturing method according to one embodiment of the present disclosure, and FIGS. 8 to 11 are schematic views illustrating aspects of a process of manufacturing the secondary battery according to one embodiment of the present disclosure.

Referring to FIGS. 7 to 11, first, the cap plate 300 and the terminal 400 are between a first mold 50 and a second mold 60 (S100).

In the present embodiment, the first mold 50 and the second mold 60 may be types of molds generally used in an injection molding process.

A first cavity C1 that is concave from one surface (e.g., a lower surface) of the first mold 50 facing the second mold 60 may be formed in the first mold 50.

A first pressing protrusion 51 protruding toward the second mold 60 may be on one surface of the first mold 50 facing the second mold 60. An inner peripheral (e.g., circumferential) surface of the first pressing protrusion 51 may surround the first cavity C1.

A protrusion 61 protruding toward the first mold 50 from one surface (e.g., an upper surface) of the second mold 60 facing the first mold 50 may be in the second mold 60.

A second cavity C2 that is concave from one surface of the second mold 60 facing the first mold 50 may be formed in the second mold 60. The second cavity C2 may surround the protrusion 61 of the second mold 60.

In operation S100, the first mold 50 and the second mold 60 may be spaced a predetermined distance from each other in the first direction, as shown in FIG. 8.

In operation S100, the cap plate 300 and the terminal 400 may be seated on the second mold 60.

In operation S100, the cap plate 300 and the terminal 400 may be spaced a predetermined distance from each other on the second mold 60 in the first direction.

In one or more embodiments, the terminal 400 may be seated on the protrusion 61 protruding from the second mold 60 in the first direction. The inner surface 301 of the cap plate 300 may be seated on a portion of the second mold 60 other than the protrusion 61. Accordingly, the second mold 60 may provide a space in which the gasket 500 is formed between the cap plate 300 and the terminal 400.

In operation S100, because the cap plate 300 and the terminal 400 are seated on the second mold 60 in operation S100, the second cavity C2 may communicate with the terminal hole 340 and the gasket groove 350.

After operation S100 is performed, the first mold 10 may be moved toward the second mold 60 to form a cavity C (S200), as shown in FIG. 8.

In operation S200, the first mold 50 may move toward the second mold 60 in a direction opposite to the first direction.

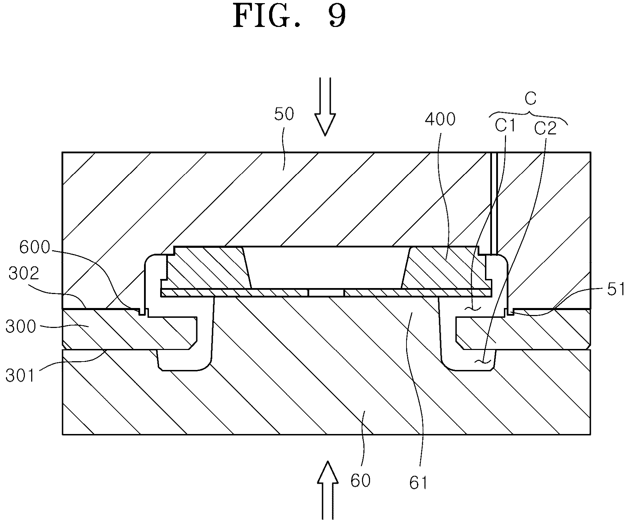

In operation S200, as the first mold 50 moves a set distance or more toward the second mold 60 in the direction opposite to the first direction, the terminal 400 may be inserted into the first cavity C1, and the first pressing protrusion 51 may come into contact with the outer surface 302 of the cap plate 300, as shown in FIG. 9.

As the first pressing protrusion 51 is in contact with the outer surface 302 of the cap plate 300, the first cavity C1 and the second cavity C2 may communicate with each other to form the cavity C. A shape of the cavity C may be a shape corresponding to a shape of the gasket 500.

After operation S200 is performed, the outer surface 302 of the cap plate 300 is pressed to form the outer groove 600 (S310).

Operation S310 may be performed by the first pressing protrusion 51.

In operation S310, as the first mold 50 moves (e.g., continuously moves) toward the second mold 60, the first pressing protrusion 51 may press the outer surface 302, as shown in FIG. 9.

Accordingly, a portion of the outer surface 302 which is in contact with the first pressing protrusion 51 may be plastically deformed toward the inner surface 301, and the first pressing protrusion 51 may be inserted into the cap plate 300 to form the outer groove 600.

The configuration (e.g., a location, a shape, etc.) of the first pressing protrusion 51 may be changed according to the configuration (e.g., a location, shape, etc.) of the outer groove 600 to be molded.

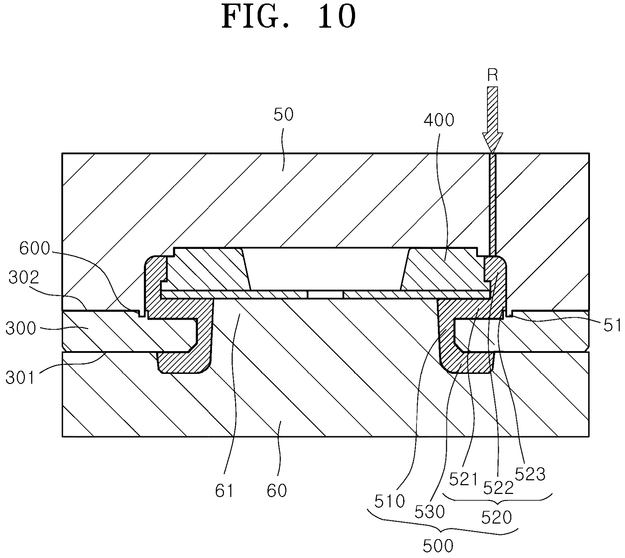

After operation S310 is performed, the resin R is injected into the cavity C to form the gasket 500 (S400), as shown in FIG. 10.

In operation S400, the resin R in a liquid state may be injected into the cavity C through an injection hole formed in the first mold 50 or the second mold 60.

The resin R injected into the cavity C may be cured into a solid state to form the gasket 500.

In this embodiment, because the first pressing protrusion 51 is inserted into the outer groove 600, the resin R injected into the cavity C may not leak through a gap between a first mold 50 and the outer surface 302. Accordingly, burrs may not be generated on an edge of the gasket 500 (e.g., the third outer gasket 523), thereby improving the appearance quality of the gasket 500.

The above-described processes for the pair of terminals 400 may be sequentially performed. Alternatively, the above-described processes may be performed at the same time (or substantially the same time).

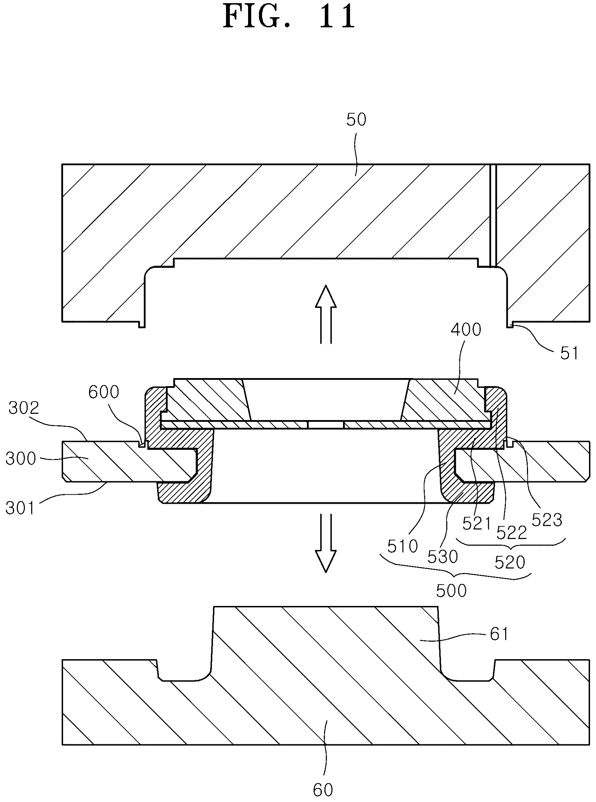

Next, the first mold 50 may move in the first direction and may be separated from the second mold 60, and the cap plate 300 and the terminal 400 coupled to each other by the gasket 500 may exit or be removed through a gap between the first mold 50 and the second mold 60, as shown in FIG. 11.

Next, the cap plate 300 may be coupled to the case 100, and the pair of terminals 400 may be bonded to the first connection member 410 and the second connection member 420.

Hereinafter, a battery module according to another embodiment of the present disclosure will be described.

The battery module according to the present embodiment may be formed such that only a detailed structure of a secondary battery 2 is different from that of the battery module according to one embodiment of the present disclosure.

Accordingly, in description of the battery module according to the present embodiment, the detailed structure of the secondary battery 2 which has not been described for the battery module according to one embodiment of the present disclosure will be described.

The description of the battery module according to one embodiment of the present disclosure may be applied to the other structures of the battery module according to the present embodiment without change.

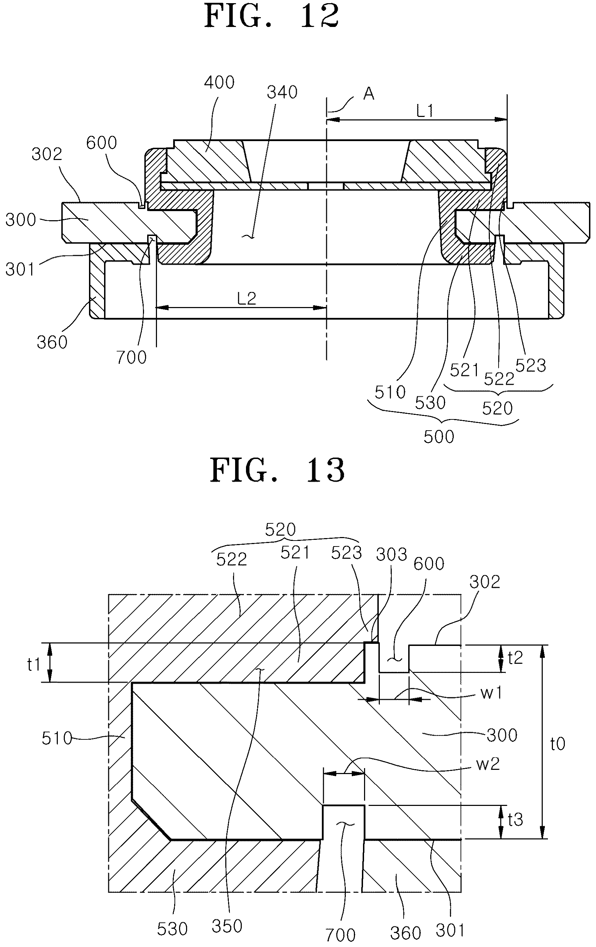

FIG. 12 is a schematic cross-sectional view illustrating a configuration of the secondary battery according to another embodiment of the present disclosure.

Referring to FIG. 12, the secondary battery 2 according to the present embodiment may further include an inner groove 700.

The inner groove 700 may be configured to function as a portion which blocks a resin from leaking through a gap between a mold and an inner surface 301 when a gasket 500 is injection-molded. Accordingly, the inner groove 700 may prevent (or at least mitigate) burrs from being generated in an edge region of the gasket 500 due to leaking of the resin when the gasket 500 is injection-molded.

FIG. 13 is a schematic enlarged view illustrating a configuration of the inner groove according to another embodiment of the present disclosure.

Referring to FIGS. 12 and 13, the inner groove 700 according to the present embodiment may have a groove shape that is concave from the inner surface 301 of a cap plate 300 toward an outer surface 302. The inner groove 700 may surround an inner gasket 530 of the gasket 500.

The inner groove 700 may be misaligned (e.g., offset) with respect to an outer groove 600. In one or more embodiments, the inner groove 700 and the outer groove 600 may not face each other in a first direction. As an example, a distance L2 from a central axis A of a terminal 400 to the inner groove 700 may be smaller than a distance L1 from the central axis A of the terminal 400 to the outer groove 600, as shown in FIG. 12. Accordingly, in the secondary battery 2 according to the present embodiment, as the inner groove 700 and the outer groove 600 do not face each other, a thickness of the cap plate 300 can be prevented from being excessively reduced (excessively thinned in the area of the inner and outer grooves 700, 600).

The inner groove 700 may be between an end portion of the inner gasket 530 and an insulating plate 360.

A depth t3 of the inner groove 700 may be smaller than a depth t1 of the gasket groove 350. A ratio (t2+t3/t0) of the sum of a depth t2 of the outer groove 600 and a depth t3 of the inner groove 700 to a thickness t0 of the cap plate 300 may be in a range from approximately 0.01 to approximately 0.5.

In an embodiment in which the ratio of the sum of the depth t2 of the outer groove 600 and the depth t3 of the inner groove 700 to the thickness t0 of the cap plate 300 is smaller than approximately 0.01, the resin may leak through a gap between the mold and the outer surface 302 or the gap between the mold and the inner surface 301 and generate burrs in the edge region of the gasket 500 when the gasket 500 is injection-molded.

In an embodiment in which the ratio of the sum of the depth t2 of the outer groove 600 and the depth t3 of the inner groove 700 to the thickness t0 of the cap plate 300 is greater than approximately 0.5, the rigidity of the cap plate 300 may be excessively weakened.

A width w2 of the inner groove 700 may be in a range from approximately 0.1 mm to approximately 1 mm.

In an embodiment in which the width w2 of the inner groove 700 is smaller than approximately 0.1 mm, the resin may leak through the gap between the mold and the inner surface 301 and generate burrs in the edge region of the gasket 500 when the gasket 500 is injection-molded.

In an embodiment in which the width w2 of the inner groove 700 is greater than approximately 1 mm, the rigidity of the cap plate 300 can be excessively weakened.

Hereinafter, a secondary battery manufacturing method according to one embodiment of the present disclosure will be described.

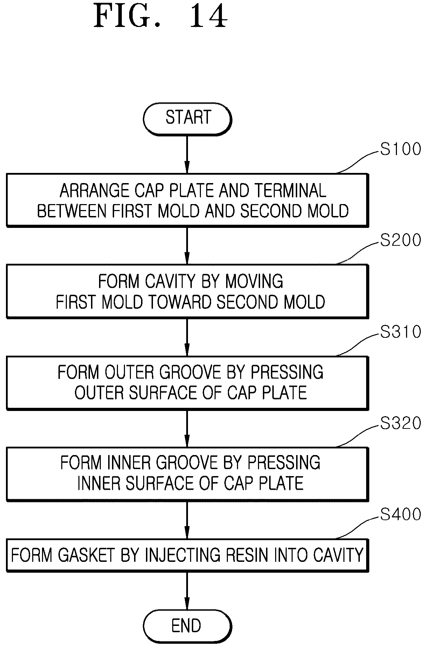

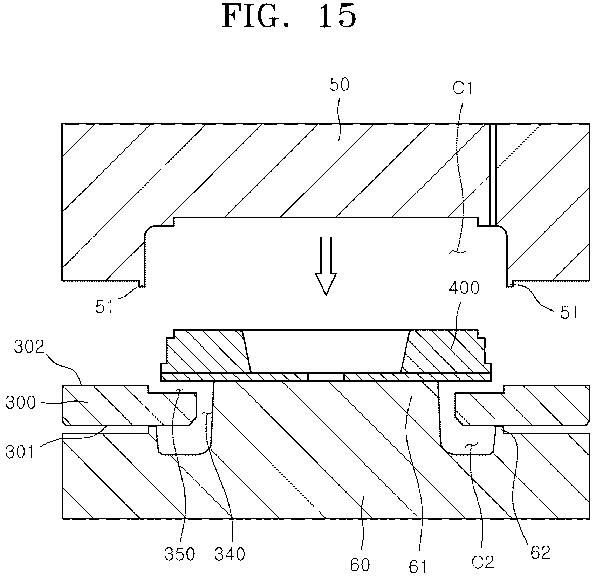

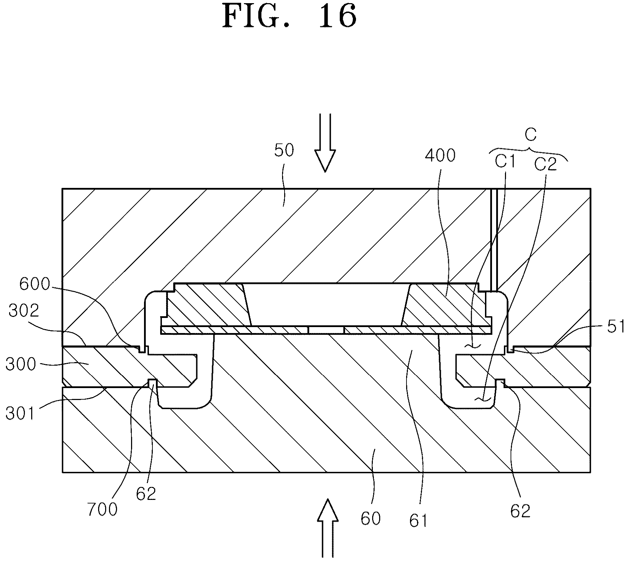

FIG. 14 is a schematic flowchart illustrating the secondary battery manufacturing method according to another embodiment of the present disclosure, and FIGS. 15 to 18 are schematic views illustrating the secondary battery manufacturing method according to another embodiment of the present disclosure.

Referring to FIGS. 14 to 15, first, the cap plate 300 and the terminal 400 are between a first mold 50 and a second mold 60 (S100).

A second pressing protrusion 62 may be on one surface (an upper surface in FIG. 15) of the second mold 60 facing the first mold 50 according to the present embodiment. An inner peripheral (e.g., circumferential) surface of the second pressing protrusion 62 may surround a second cavity C2.

In operation S100, the first mold 50 and the second mold 60 may be spaced a predetermined distance from each other in the first direction.

In operation S100, the cap plate 300 and the terminal 400 may be seated on the second mold 60.

In operation S100, the cap plate 300 and the terminal 400 may be spaced a predetermined distance from each other in the second mold 60 in the first direction. The terminal 400 may be seated on a protrusion 61 protruding from the second mold 60 in the first direction, and the inner surface 301 of the cap plate 300 may be seated on the second pressing protrusion 62.

After operation S100 is performed, a first mold 10 may move toward the second mold 60 to form a cavity C (S200).

In operation S200, the first mold 50 may move toward the second mold 60 in a direction opposite to the first direction.

In operation S200, as the first mold 50 moves a set distance or more toward the second mold 60 in the direction opposite to the first direction, the terminal 400 may be inserted into a first cavity C1, and a first pressing protrusion 51 may come into contact with the outer surface 302 of the cap plate 300.

Because the first pressing protrusion 51 is in contact with the outer surface 302 of the cap plate 300, the first cavity C1 and the second cavity C2 communicate with each other to form the cavity C. A shape of the cavity C may be a shape corresponding to a shape of the gasket 500.

After operation S200 is performed, the outer surface 302 of the cap plate 300 is pressed to form the outer groove 600 (S310), and the inner surface 301 of the cap plate 300 is pressed to form the inner groove 700 (S320).

Operation S310 may be performed by the first pressing protrusion 51, and operation S320 may be performed by the second pressing protrusion 62.

Operation S310 and operation S320 may be performed at the same time (or substantially the same time). Alternatively, operation S310 and operation S320 may be sequentially performed.

In operation S310, because the first mold 50 moves (e.g., continuously moves) toward the second mold 60, the first pressing protrusion 51 may press the outer surface 302.

Accordingly, a portion of the outer surface 302 in contact with the first pressing protrusion 51 may be plastically deformed toward the inner surface 301, and the first pressing protrusion 51 may be inserted into the cap plate 300 to form the outer groove 600.

In operation S320, because the first mold 50 moves (e.g., continuously moves) toward the second mold 60, the second pressing protrusion 62 may press the inner surface 301.

Accordingly, a portion of the inner surface 301 in contact with the second pressing protrusion 62 may be plastically deformed toward the outer surface 302, and the second pressing protrusion 62 may be inserted into the cap plate 300 to form the inner groove 700.

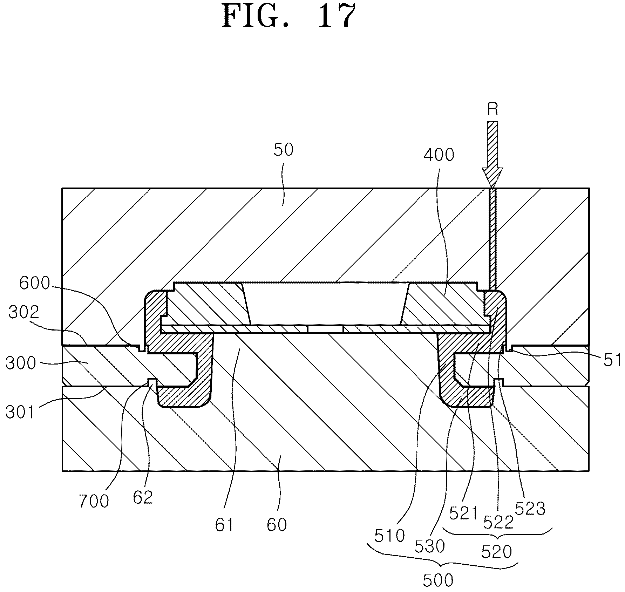

After operation S310 and operation S320 are performed, a resin R is injected into the cavity C to form the gasket 500 (S400), as shown in FIG. 17.

In operation S400, the resin R in a liquid state may be injected into the cavity C through an injection hole formed in the first mold 50 or the second mold 60.

The resin R injected into the cavity C may be cured into a solid state to form the gasket 500.

In this embodiment, because the first pressing protrusion 51 is inserted into the outer groove 600, the resin R injected into the cavity C may not leak through a gap between the first mold 50 and the outer surface 302. Accordingly, burrs may not be generated at the edge of the gasket 500 (e.g., a third outer gasket 523), thereby improving the appearance quality of the gasket 500.

Because the second pressing protrusion 62 is inserted into the inner groove 700, the resin R injected into the cavity C may not leak through a gap between the second mold 60 and the inner surface 301. Accordingly, burrs may not be generated at the edge of the gasket 500 (e.g., the inner gasket 530), thereby improving the appearance quality of the gasket 500.

The above-described processes for a pair of terminals 400 may be sequentially performed. Alternatively, the above-described processes may be performed at the same time (or substantially the same time).

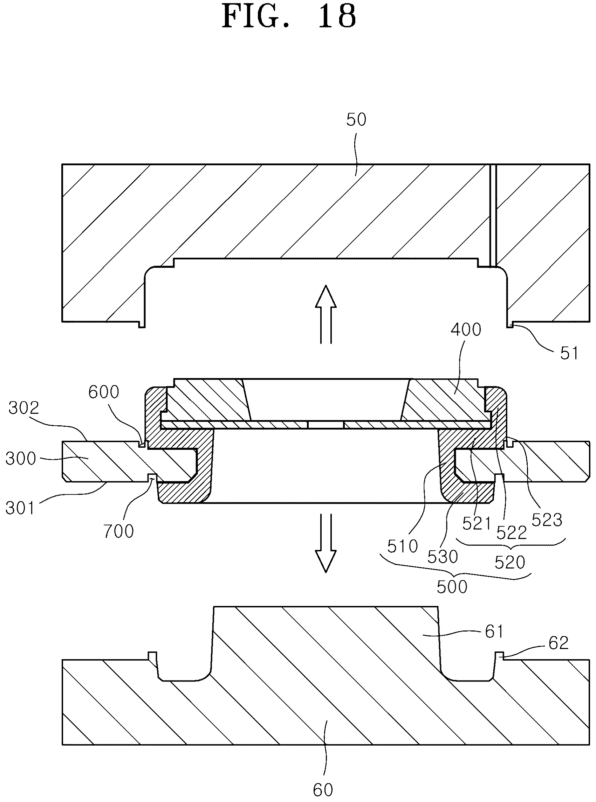

Next, the first mold 50 may move in the first direction and may be separated from the second mold 60, and the cap plate 300 and the terminal 400 coupled to each other by the gasket 500 may exit or be removed through a gap between the first mold 50 and the second mold 60, as illustrated in FIG. 18.

Next, the cap plate 300 may be coupled to a case 100, and the pair of terminals 400 may be bonded to a first connection member 410 and a second connection member 420.

According to the present disclosure, when a gasket is injection-molded, a resin can be prevented (or at least mitigated) from leaking to a boundary region between a mold and a cap plate to prevent (or at least mitigate) burrs from being generated on an edge region of the gasket.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art in accordance with the scope of the present disclosure as defined by the appended claims.

## Claims

1. A secondary battery (2) comprising:
a case (100);
an electrode assembly (200) accommodated in the case (100);
a cap plate (300) coupled to the case (100) and comprising an inner surface (301) facing the electrode assembly (200) and an outer surface (302) opposite to the inner surface (301);
a terminal (400) protruding outward from the cap plate (300) and connected to the electrode assembly (200);
a gasket (500) between the cap plate (300) and the terminal (400); and
an outer groove (600), the outer groove (600) being concave from the outer surface (302) toward the inner surface (301) and surrounding the gasket (500).

2. The secondary battery (2) as claimed in claim 1, wherein a ratio of a depth of the outer groove (600) to a thickness of the cap plate (300) is in a range from approximately 0.01 to 0.5.

3. The secondary battery (2) as claimed in claim 1 or 2, wherein the gasket (500) comprises:
a gasket body (510) passing through the cap plate (300);
an outer gasket (520) extending from the gasket body (510) and facing the outer surface (302); and
an inner gasket (530) extending from the gasket body (510) and facing the inner surface (301),
wherein the outer groove (600) surrounds the outer gasket (520).

4. The secondary battery (2) as claimed in claim 3, wherein:
the cap plate (300) further comprises a gasket groove (350), the gasket groove (350) being concave from the outer surface (302) toward the inner surface (301) and supporting the outer gasket (520); and
the outer groove (600) surrounds the gasket groove (350).

5. The secondary battery (2) as claimed in claim 4, wherein:
the outer groove (600) and the gasket groove (350) are spaced apart from each other;
and
the outer surface (302) further comprises a support surface (303) between the outer groove (600) and the gasket groove (350).

6. The secondary battery (2) as claimed in claim 5, wherein the outer gasket (520) comprises:
a first outer gasket (521) in the gasket groove (350);
a second outer gasket (522) extending from the first outer gasket (521) and surrounding the terminal (400); and
a third outer gasket (523) extending from the second outer gasket (522) and seated on the support surface (303).

7. The secondary battery (2) as claimed in any one of the preceding claims, further comprising an inner groove (700), the inner groove (700) being concave from the inner surface (301) toward the outer surface (302).

8. The secondary battery (2) as claimed in claim 7, wherein a sum of a depth of the outer groove (600) and a depth of the inner groove (700) is smaller than a thickness of the cap plate (300).

9. The secondary battery (2) as claimed in claim 7 or 8, wherein the outer groove (600) and the inner groove (700) are misaligned with respect to each other.

10. The secondary battery (2) as claimed in any one of claims 7 to 9, wherein the gasket (500) comprises:
a gasket body (510) passing through the cap plate (300);
an outer gasket (520) extending from the gasket body (510) and facing the outer surface (302); and
an inner gasket (530) extending from the gasket body (510) and facing the inner surface (301),
wherein the inner groove (700) surrounds the inner gasket (530).

11. A battery module comprising:
a housing (1); and
a plurality of secondary batteries (2) as claimed in any one of the preceding claims accommodated in the housing (1).

12. A secondary battery (2) manufacturing method, comprising:
arranging a cap plate (300) and a terminal (400) between a first mold (10, 50) and a second mold (60);
forming a cavity by moving the first mold (10, 50) toward the second mold (60);
forming an outer groove (600) by pressing an outer surface (302) of the cap plate (300);
and
forming a gasket (500) by injecting a resin into the cavity.

13. The secondary battery (2) manufacturing method as claimed in claim 12, wherein, in the forming of the outer groove (600) by pressing the outer surface (302) of the cap plate (300), a first pressing protrusion (51) protruding from the first mold (10, 50) toward the outer surface (302) is inserted into the outer groove (600).

14. The secondary battery (2) manufacturing method as claimed in claim 12 or 13, further comprising forming an inner groove (700) by pressing an inner surface (301) of the cap plate (300).

15. The secondary battery (2) manufacturing method as claimed in claim 14, wherein, in the forming of the inner groove (700) by pressing the inner surface (301) of the cap plate (300), a second pressing protrusion (62) protruding from the second mold (60) toward the inner surface (301) is inserted into the inner groove (700).
